# EUROPÄISCHE PATENTSCHRIFT

(11) **EP 3 871 178 B1**
(45) Veröffentlichungstag und Bekanntmachung des Hinweises auf die Patenterteilung: **19.07.2023**
(21) Anmeldenummer: 19794477.0
(22) Anmeldetag: 22.10.2019
(51) Int. Cl.: H02J 3/14, H02J 3/32, H02J 7/35, H02J 13/00, G06Q 50/06

(54) **COMPUTER IMPLEMENTIERTES VERFAHREN ZUR DEZENTRALEN STEUERUNG EINES ENERGIENETZES**
COMPUTER-IMPLEMENTED METHOD FOR DECENTRALISED CONTROL OF A POWER NETWORK
PROCÉDÉ MIS EN OEUVRE PAR ORDINATEUR POUR LA GESTION DÉCENTRALISÉE D'UN RÉSEAU ÉNERGÉTIQUE

(30) Priorität: 23.10.2018 CH 12922018
(43) Veröffentlichungstag der Anmeldung: 01.09.2021
(73) Patentinhaber: Murmeli AG, 6300 Zug (CH)
(72) Erfinder: DANUSER, Andreas, 5412 Gebenstorf (CH)
(74) Vertreter: Hepp Wenger Ryffel AG
(86) Internationale Anmeldenummer: PCT/EP2019/078732
(87) Internationale Veröffentlichungsnummer: WO 2020/083912

(56) Entgegenhaltungen:
- EP-A2- 2 296 112
- EP-A2- 2 497 177
- DE-A1-102011 106 114

## Beschreibung

Die vorliegende Erfindung betrifft ein computerimplementiertes Verfahren zur dezentralen Steuerung eines Energienetzes, eine Vorrichtung zur dezentralen Steuerung von Energienetzen und ein Computerprogrammprodukt.

Energienetze werden traditionell zentral gesteuert. Dabei werden die Energieflüsse von Energieversorgungsunternehmen in einer Leitstelle überwacht. Anhand von prognostiziertem Verbrauch, Schwankungen in der Netzfrequenz wird die Produktion von Energie, wie beispielsweise Kraftwerke, hoch- und runtergefahren.

In der Schweiz wurde 21. Mai 2017 die Energiestrategie 2050 angenommen. In der Folge wird der Anteil an erneuerbaren Energien am der Stromerzeugung steigen. Der Aufstieg erneuerbarer Energiequellen und deren Volatilität stellen neue Anforderungen an die Energieübertragungsnetze und deren Betrieb. In US 9,804,623 wird ein dezentrales Kontrollsystem und eine autonome Verteilung in einem Smart Grid gezeigt. Einzelne Haushalte werden zu Mikronetzen zusammengefasst. Jedes der Mikronetze wird durch ein Kontrollzentrum (CC) gesteuert. Jedes der Mikronetze versucht zunächst eine eigene Energiebalance zu erreichen. Falls das Mikronetz dies nicht alleine erreicht fordert es zusätzliche Energie von einem Makronetz an. In Figur 3 wird gezeigt, dass untergeordnete Netze durch übergeordnete Netze geregelt werden. Das in US 9,804,623 gezeigte Kontrollsystem hat den Nachteil, dass es nicht skalierbar ist. Jedes Mikro- und Makronetz muss vollständig von neuem aufgesetzt werden und eingerichtet werden.

Ein anderes Kontrollsystem wird in EP 2 497 177 gezeigt. In dem System werden einzelne Regionen eines Energienetzes durch regionale Kontrollmodule verwaltet. Das Gesamtnetz wird durch ein Firmenkontrollmodul gesteuert. Die regionalen Kontrollmodule verteilen die Leistung innerhalb ihrer Region und versuchen unabhängig von dem übergeordneten Firmenkontrollmodul Nachfrage und Angebot in Balance zu halten. Auch hier liegt ein zentraler Steueransatz vor, welcher zudem in seiner Skalierbarkeit limitiert ist.

CN 104124683 zeigt eine autonome Struktur für Leistungssysteme. In der Struktur wird die Leistung unter Verwendung einer objektiven Leittechnologie verteilt. Dabei wird dynamisch in Echtzeit durch teilautonome Systeme Energiebedarf und Energieerzeugung in Balance gehalten. Auch die Struktur aus CN 104124683 lässt sich nicht einfach implementieren und skalieren.

Aus EP 2 296 112 A2 ist ein System zum automatisierten Aushandeln von Energieanpassungsanfragen bekannt. Recheneinheiten in unterschiedlichen Managementeinheiten arbeiten zusammen, um Energieanpassungen auszuhandeln. Die Steuerung, wieviel Energie ein Verbraucher verbrauchen bzw. ein Lieferant liefern soll, erfolgt über ein Aushandelsverfahren mittels eines Systems von Energiemanagementgeräten (EMD), die in untere, mittlere und obere Geräte untereilt sind.

Es ist daher die Aufgabe der Erfindung, Energieverteilungsnetze effizient und einfach zu steuern. Insbesondere ist es die Aufgabe der Erfindung, eine dezentrale Steuerung bereitzustellen, die einfach implementiert werden kann, flexibel einsetzbar ist und idealerweise skalierbar verwendet werden kann.

Diese Aufgabe wird durch das in unabhängigen Ansprüchen definierte Verfahren, die Vorrichtung und das Computerprogrammprodukt gelöst. Weitere Ausführungsform ergeben sich aus den abhängigen Patentansprüchen.

Ein erster Aspekt der Erfindung betrifft ein computerimplementiertes Verfahren zur dezentralen Steuerung eines Elektrizitätsnetzes. In dem Verfahren werden mit einem Kontroller Energieflussdaten von zumindest zwei Recheneinheiten über ein Kommunikationsnetzwerk empfangen. An die Recheneinheiten sind jeweils eine Mehrzahl an Geräten angeschlossen. Die Geräte erfassen und/oder beeinflussen Energieflüsse. Die Energieflüsse sind insbesondere elektrischer Strom, Wärme oder Gas. Die Recheneinheiten weisen je eine Steuereinheit auf und zumindest ein Teil der Geräte sendet Energieflussdaten an die Recheneinheiten. Die Recheneinheiten mit den angeschlossenen Geräten werden mit je einem ersten Gridblock modelliert. Der Gridblock weist eine Datenstruktur mit einem Energiekonsum, einer Energieproduktion, einem Energiespeicher und einem externen Energiefluss auf.

Bevorzugt wird dabei in der Modellierung zwischen einem fixen Konsum und einer fixen Produktion sowie einem flexiblen Konsum und einer flexiblen Produktion differenziert. Fixer Konsum und Produktion bezieht sich auf einen Konsum oder eine Produktion, welche unbeeinflusst anfallen, also beispielsweise ein Konsum im Haushalt z.B. durch Kochen oder TV oder eine Produktion mittels Solarenergie oder Windenergie.

Der Zeitpunkt eines flexiblen Konsums bzw. einer flexiblen Produktion lässt sich beeinflussen. Dabei wird insbesondere differenziert zwischen verschiedenen Arten von Flexibilitäten: Bei einer ersten Gruppe von flexiblem Konsum oder Produktion kann die Beeinflussung via Last- oder Produktionsmanagement erfolgen. Beispiele sind das Steuern eines elektrischen Boilers oder einer Wärmepumpe. Eine zweite Gruppe einer Flexibilität umfasst Konsum und Produktion, bei denen wahlweise ein Einspeichern oder Ausspeichern von Energie möglich ist, beispielsweise in Batterien oder anderen Energiespeichern, z.B. Speichern von elektrischer Energie in einer lokalen Batterie oder Speichern von potentieller Energie in einem Wasser-Reservoir. Eine dritte Gruppe betrifft Konsum oder Produktion, bei dem durch eine Sektorkopplung ein Management möglich ist, beispielsweise durch Verschieben von Energie zwischen Sektoren, wie in Zusammenhang mit Blockheizkraftwerken, welche z.B. Gas in elektrischer Energie und Wärme umwandeln.

Der Konsum ist die Summe aller durch die Geräte konsumierten Energie im ersten Gridblock. Die Produktion ist die Summe aller durch die Geräte produzierten Energie. Der Speicher ist die Summe aller im physischen Speicher gespeicherten Energie im ersten Gridblock und der externe Energiefluss stellt die in den oder aus den ersten Gridblock fliessende Energie dar. Der Begriff physischer Speicher ist dabei breit zu verstehen und umfasst nicht ausschliesslich lokale Energiespeicher. Ganz allgemein umfasst der Begriff jede Art von Speicher, welcher im Zusammenhang mit dem Ausspeisen von Energie ("Ausatmen") oder dem Einspeisen von Energie ("Einatmen") in das beziehungsweise aus dem übergeordneten Versorgungsnetz dazu dient, eine flexible Produktion oder einen flexiblen Konsum zu bewerkstelligen.

Zwei oder mehrere erste Gridblocks werden mit einem zweiten Gridblock modelliert. Der zweite Gridblock umfasst eine Mehrzahl an ersten Gridblocks und weist die gleiche Datenstruktur wie der erste Gridblock auf.

Jeder zweite Gridblock wird durch einen Kontroller modelliert, wecher einen Regelmechanismus aufweist.

Zwei oder mehrere der ersten Gridblocks werden durch den Regelmechanismus des zweiten Gridblocks durch Anweisungen beeinflusst. Der Regelmechanismus des zweiten Gridblocks sendet Anweisungen an den ersten Gridblock. Die Anweisungen enthalten lediglich Signale zur Steuerung des ersten Gridblocks als Ganzes, ohne einzelne Geräte des ersten Gridblocks direkt zu steuern. Die Steuereinheit der Recheneinheit des ersten Gridblocks berechnet Steuerbefehle für die einzelnen Geräte basierend auf den Anweisungen des Regelmechanismus des zweiten Gridblocks. Die Recheneinheit des ersten Gridblocks sendet die Steuerbefehle an die Geräte.

Ein oder mehrere zweite Gridblocks können durch einen dritten Gridblock modelliert werden, welcher wiederum einen Kontroller mit einem Regelmechanismus aufweist. Ein oder mehrere dritte Gridblocks können durch einen vierten Gridblock modelliert werden, welcher wiederum einen Kontroller mit einem Regelmechanismus aufweist.

Diese strukturierte Modellierung kann beliebig weitergeführt werden.

Das Verfahren hat den Vorteil, dass durch die Gridblocks eine skalierbare Struktur bereitgestellt wird. Das Energienetz wird durch Gridblocks modelliert, die die gleiche Struktur aufweisen.

Dadurch kann die Datenstruktur beliebig oft kombiniert und geschachtelt werden und grosse Netze mit vielen Geräten können einfach modelliert und nach einer dezentralen Logik gesteuert werden.

Ein Gridblock kann mehrere Geräte umfassen. Beispielsweise kann ein erster Gridblock einen Haushalt abbilden, ein zweiter Gridblock einen Pool an Haushalten, wie ein Mehrparteienhaus, ein dritter Gridblock ein Quartier, ein vierter Gridblock einen Ortschaft, usw.

Die Geräte können als schaltbarer Elektroschalter, Stromzähler, Gaszähler, Ventil, Wärmezähler, steuerbare Ladegeräte, steuerbare Heizelemente, Haushaltsgeräte mit steuerbaren Verbrauch oder ähnlich ausgebildet sein.

Das Modellieren kann beim ersten Gridblock durch die Recheneinheit ausgeführt werden. Die Recheneinheit kann ein lokaler (Klein-)-Computer, ein sog. Fog-Device sein.

Das Modellieren kann bei den zweiten, dritten, vierten und weiteren Gridblocks durch den Kontroller ausgeführt werden. Der Kontroller ist insbesondere ein Computer in einem Netzwerk.

Die Recheneinheit enthält vorzugsweise eine oder mehrere der folgenden Komponenten: einen (Mikro-)Prozessor und Speicher für Programme und Daten, einen Datenspeicher, in welchem Mess-Daten über längere Zeit gespeichert werden können, eine Kommunikationseinheit, welche die Datenübertragung zu und von den Geräten ermöglicht, ein oder mehrere Softwareprogramme, welche Messdaten erfassen und Geräte unter Berücksichtigung der Anweisungen steuern können, wobei Programme bevorzugt in der Lage sind, die ihnen übertragenen Funktionen auch ohne Verbindung zu übergeordneten Instanzen vollziehen zu können.

Die Anweisung und die Befehle, können in Realtime, d. h. bevorzugt mit Latenzzeiten von weniger als 1 min, bevorzugt weniger als 30 Sekunden, besonders bevorzugt weniger als 5 Sekunden oder weniger gesendet werden. Der Konsum, der Speicher, die Produktion und der externe Energiefluss sind bevorzugt aktuell.

Der Konsum und/oder die Produktion im Gridblock können aufgeteilt werden in einen flexiblen Konsum und in einen fixen Konsum bzw. eine flexible Produktion und/oder einen fixen Produktion. Beispielsweise kann der Gridblock Energiespeicher, wie Netzbatterien oder Hausbatterien oder E-Mobile als Geräte aufweisen. Flexible Konsumenten können den Zeitpunkt, zu dem die Energie bezogen wird variieren, wie beispielsweise ein Boiler oder eine E-Mobil, welches aufgeladen werden soll.

Diese flexible Nachfrage erlaubt den Gridblocks ein Demand Side Management. Jeder Gridblock kann konfiguriert sein, den eigenen Gridblock ohne externe Energieflüsse zu verwalten. Zusätzlich können untergeordnete Gridblocks der nächsthöheren Ebene melden, dass Energie benötigt wird, oder dass mehr Energie bereitgestellt wird als benötigt wird (Überschuss). Der übergeordnete Gridblock kann dann konfiguriert sein, den eigenen Gridblock ohne externe Energieflüsse zu verwalten und andere untergeordnete Gridblocks anweisen bestimmte Energie zu verbrauchen, bereitzustellen oder zu speichern. Dabei wird nur die Anweisung erteillt Energie zu verbrauchen oder zu speichern. Welche Geräte dies wie ausführen wird nur durch die ersten Gridblocks mittels Befehlen gesteuert.

Gleichzeitig kann das erfindungsgemässe Verfahren auch ein Demand Side Management (DSM) erlauben durch die flexible Produktion. Beispielsweise kann der übergeordnete Gridblock Anweisungen an einen untergeordneten Gridblock senden, Energie bereitzustellen. Diese Energie kann dann durch einen ersten Gridblock und über Geräte, wie beispielsweise die oben genannten Speicher bereitgestellt werden.

In einer bevorzugten Ausführungsform wird beim Modellieren jeder zweite und/oder jeder erste Gridblock mit einem Regelmechanismus dekoriert. Dekorieren bedeutet, dass der Regelmechanismus dem Gridblock zugeordnet wird. Dadurch kann dem Gridblock flexibel ein Regelverhalten zugeordnet werden.

Der Regelmechanismus kann aus einer Auswahl vorgegebener Regelmechanismen ausgewählt werden. Insbesondere kann eine Auswahl vorgegebener Regelmechanismen entsprechend der im Gridblock vorhandenen Geräte und/oder einer Ebene des Gridblocks ausgewählt werden.

Das Dekorieren erlaubt eine einfache und flexible Anpassung eines Gridblock an die Geräte, welche im Gridblock umfasst sind. Ebenen der Gridblocks werden hier und im Folgenden durch die Nummerierung ("erster Gridblock", "zweiter Gridblock") beschrieben; weitere Gridblocks ("dritter Gridblock", "vierter Gridblock", usw.) sind beliebig möglich.

In einer bevorzugten Ausführungsform senden die Recheneinheiten den maximal mögliche und/oder den minimal möglichen Konsum, Energie und Speicherkapazität an den Kontroller. Die Gridblocks enthalten zusätzlich jeweils den maximalen und/oder den minimalen Konsum, Produktion, und Speicherkapazität. Dadurch können die Gridblocks zusätzlich untereinander die Koordination verbesseren. Beispielsweise könnte ein erster Gridblock Energieflussdaten von Geräten empfangen, die einen erhöhten Konsum zeigen. Durch die maximale Produktion kann der Gridblock feststellen, ob die Geräte des Gridblocks genügend Energie bereitstellen können. Falls nicht, kann der Gridblock den Konsum an den übergeordneten zweiten Gridblock melden, dass seine Geräte zusätzliche Energie benötigen. Durch die maximale Produktion kann der zweite Gridblock abschätzen, ob andere in ihm enthaltene Geräte die benötigte Energie bereitstellen können. Dies ist ein Beispiel für supply side management (SSM). In einer bevorzugten Ausführungsform ist jeder Gridblock eingerichtet von einem einzigen anderen übergeordneten Gridblock Anweisungen zu erhalten. Bevorzugt ist jeder zweite und höhere Gridblock eingerichtet an einen oder mehrere andere untergeordnete Gridblocks Anweisungen zu senden. Dadurch wird eine einfache Struktur mit klaren Zuordnungen geschaffen.

In einer bevorzugten Ausführungsform sind die Regelmechanismen und/oder die Steuereinheit eingerichtet, den jeweilig zugehörigen Gridblock zu steuern. Die Autonomie der Steuereinheit hat den Vorteil, dass bei Unterbrüchen im Kommunikationsnetzwerk der jeweilige erste Gridblock unabhängig weiter funktionieren kann. Die Steuereinheit kann Anweisungen für ein Notfallregelverhalten enthalten. Das Notfallregelverhalten kann heissen, dass der Gridblock keine externen Energieflüsse benötigt und dadurch im Gleichgewicht gehalten wird.

Die Autonomie der Regelmechanismen erlaubt es, die jeweiligen Gridblocks auf unterschiedlicher Hardware laufen zu lassen. So kann beispielsweise der erste Gridblock auf der Steuereinheit ausgeführt werden, während der zweite Gridblock auf einer anderen Recheneinheit ausgeführt wird. In bestimmten Ausführungsformen können die Gridblocks auf der gleichen Hardware ausgeführt werden.

Die Steuereinheit kann als Computerprogrammprodukt oder als eigener Regler ausgebildet sein.

In einer bevorzugten Ausführungsform werden mehrere erste Gridblocks zu mehreren zweiten Gridblocks zusammengefasst. Die zweiten Gridblocks werden mit einem dritten Gridblock modelliert. Der dritte Gridblock umfasst einen oder mehr zweite Gridblocks und weist die gleiche Datenstruktur wieder erste und der zweite Gridblock auf. Jedem dritten Gridblock wird ein Regelmechanismus zugeordnet. Ein oder mehrere zweite Gridblock werden durch den Regelmechanismus des dritten Gridblock gesteuert. Der dritte Gridblock sendet Anweisungen an den oder die zweiten Gridblocks, wobei die Anweisungen lediglich Signale zu Steuerung der zweiten Gridblocks als Ganzes enthält, ohne die ersten Gridblocks im zweiten Gridblock direkt zu steuern. Dadurch kann eine dritte Ebene bereitgestellt werden. Beispielsweise könnte ein Haushalt in einem ersten Gridblock zusammengefasst werden und ein Strassenzug mit mehreren Haushalten zu einem zweiten Gridblock. Ein Wohnviertel könnte dann durch den dritten Gridblock zusammengefasst werden.

Optional kann der dritte Gridblock zusätzlich zu dem oder den zweiten Gridblocks auch direkt erste Gridblocks modellieren und durch Anweisungen steuern. Da die Datenstrukturen der Gridblocks gleich sind ist die Modellierung flexibel.

Analog dazu könnten ein oder mehrere dritte Gridblocks durch einen vierten Gridblock, ein oder mehrere vierte Gridblocks durch einen fünften Gridblock unsw. gesteuert werden, usw. Dabei weisen die Gridblocks sämtlich die gleiche Datenstruktur auf, sodass beliebig grosse Energienetze mit dem vorgeschlagenen Verfahren gesteuert werden.

Die zweiten, dritten, vierten (usw.) Gridblocks können je auf einer eigenen Hardware laufen. Alternativ könnten die mehrere oder alle Gridblocks der zweiten und höhreren Ebenen auf einem Server verwendet werden.

Ein zweiter Aspekt der Erfindung betrifft eine Vorrichtung zur dezentralen Steuerung von Energieübertragungsnetzen, insbesondere Elektrizitätsnetzen. Die Vorrichtung weist zumindest zwei Recheneinheiten und einen Kontroller auf und ist ausgebildet das oben beschriebene Verfahren auszuführen.

In einer bevorzugten Ausführungsform sind zumindest die Geräte von zwei oder mehr ersten Gridblocks entlang einer Linie angeordnet und mit dieser verbunden, wobei ein Energiefluss über die Linie erfolgt. Der externe Energiefluss stellt einen Energiefluss zwischen den Geräten eines Gridblock und der Linie dar.

Durch die externe Energieflüsse können Energieflüsse entlang der Leitung durch ein Mapping berechnet werden. In der Folge können auch Lastflüsse innerhalb der Netze analysiert werden. In einer Variante kann die Leitung in Leitungssegmente unterteilt werden und für jedes Leitungssegment der Lastfall berechnet werden durch die externen Energieflüsse der Gridblocks. Dadurch kann die Auslastung einer Leitung bestimmt und geregelt werden. Im Fall von Elektrizitätsnetzen ist die Linie eine Stromleitung.

Der Regelmechanismus kann eingerichtet sein, Mengen an transferierter Energie zu anderen Gridblock zu protokollieren und in einem virtuellen Energiespeicher abzulegen.

In einer bevorzugten Ausführungsform weist jeder Gridblock zusätzlich einen virtuellen Energiespeicher auf.

Ein dritter Aspekt der Erfindung betrifft ein Computerprogrammprodukt, welches Befehle umfasst, die bei der Ausführung des Programms durch einen Kontroller und eine Recheneinheit diese veranlassen, das oben beschriebene Verfahren auszuführen.

Anhand von Figuren, welche lediglich Ausführungsbeispiele darstellen, wird die Erfindung im Folgenden näher erläutert. Es zeigen schematisch:
- Figur 1:: ein Energieverteilungsnetz zur Stromübertragung,
- Figur 2A und 2B:: einen Haushalt mit mehreren Geräten,
- Figur 3A:: einen ersten Gridblock,
- Figur 3B:: eine Linie mit mehreren Gridblocks,
- Figur 4:: das Energieverteilungsnetz aus Figur 1 mit mehreren Gridblockebenen,
- Figur 5:: eine schematische Darstellung mehrerer Haushalte und mehrerer Gridblocks und
- Figur 6A und 6B:: Flussdiagramme für die Steuerung zwischen Kontroller und Steuereinheit.

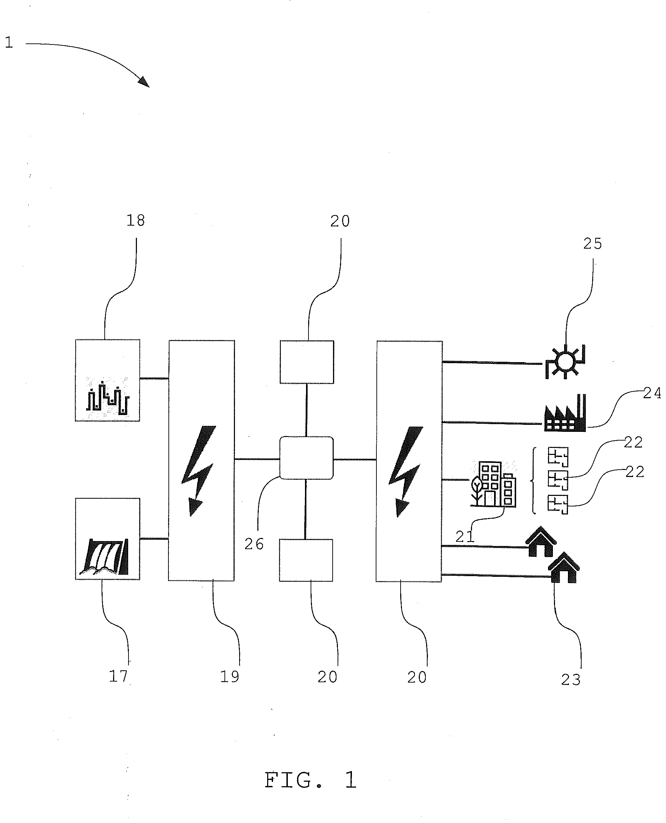

Figur 1 zeigt ein Energienetz 1 und seine Bestandteile. Das Energienetz 1 enthält zentrale Produktionsstätten , wie Wasserkraftwerke, Atomkraftwerke oder Kohlekraftwerke. Die erzeugte Elektrizität wird in ein Höchst- und Hochspannungsnetz 19 eingespeist. Gleichzeitig kann auch am Energiemarkt 18 Energie, beispielsweise aus dem Ausland, eingekauft und in das Hochspannungsnetz 19 eingespeist werden. An einem Umspannwerk 26 wird die Elektrizität auf eine Mittel- oder Niederspannung transformiert und in verschiedene Verteilnetze 20 eingespeist. An die Verteilnetze 20 sind jeweils verschiedene Endanschlüsse angeschlossen wie zum Beispiel Zusammenschlüsse zum Eigenverbrauch (ZEV) 21 mit mehreren Wohnungen 22, Einfamilienhäuser 23 und Fabriken 24. Auch ein Erzeuger, also ein Kraftwerk 25 kann an das Verteilnetz 20 angeschlossen sein.

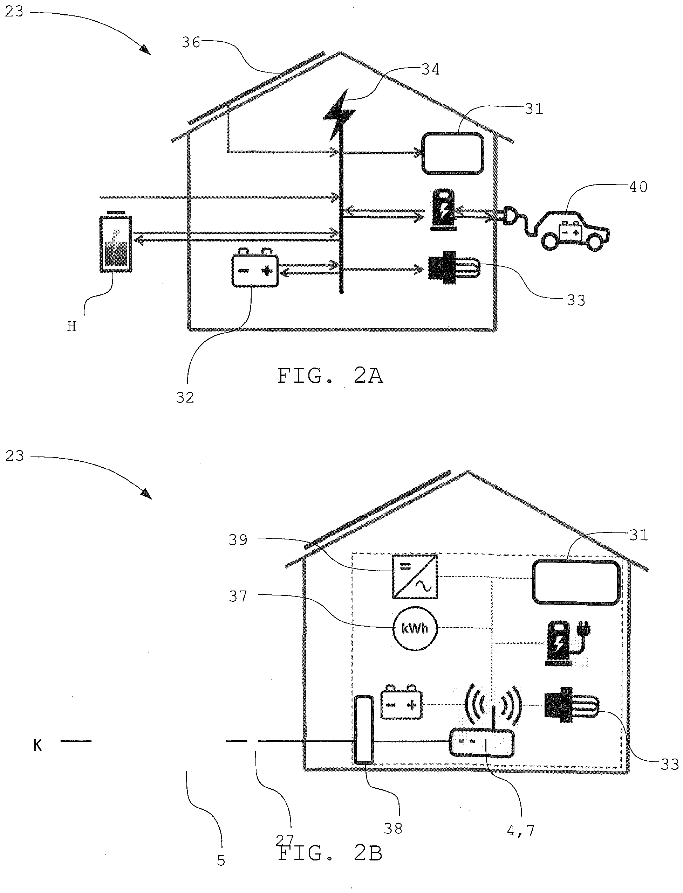

Ein einzelnes Haus 23 ist beispielhaft in Figuren 2A und 2B gezeigt. An ein Hausnetz 34 des Hauses 23 sind verschiedene Produzenten und Konsumenten angeschlossen. So ist eine Solaranlage 36 an das Hausnetz 34 angeschlossen, welche Energie erzeugt. Das Haus 23 hat einen flexiblen Energiebedarf und einen fixen Energiebedarf. Der fixe Energiebedarf 31 betrifft Anwendungen des täglichen Lebens, die unmittelbar bei Bedarf und zeitlich nicht flexibel Energie benötigen, beispielsweise die Nutzung einer Lampe, eines Backofens oder ein Herdes. Der flexible Energiebedarf 33 betrifft einen Energiebedarf, der zeitlich flexibel bezogen werden kann, wie beispielsweise das Aufheizen von Brauchwasser (Boiler)oder das Laden der Batterie eines E-Mobils, was (innerhalb von Grenzen) zu einem beliebigen Zeitpunkt erfolgen kann. Ausserdem kann das Haus eine Hausbatterie 32 aufweisen, in der Elektrizität zwischengespeichert werden kann. Bestimmte Elemente können gleichzeitig ein Speicher und ein flexibler Verbraucher sein. Beispielsweise kann ein E-Mobil 40, welches über Nacht an das Hausnetz angeschlossen ist, ein flexibler Verbraucher und ein Energiespeicher sein.

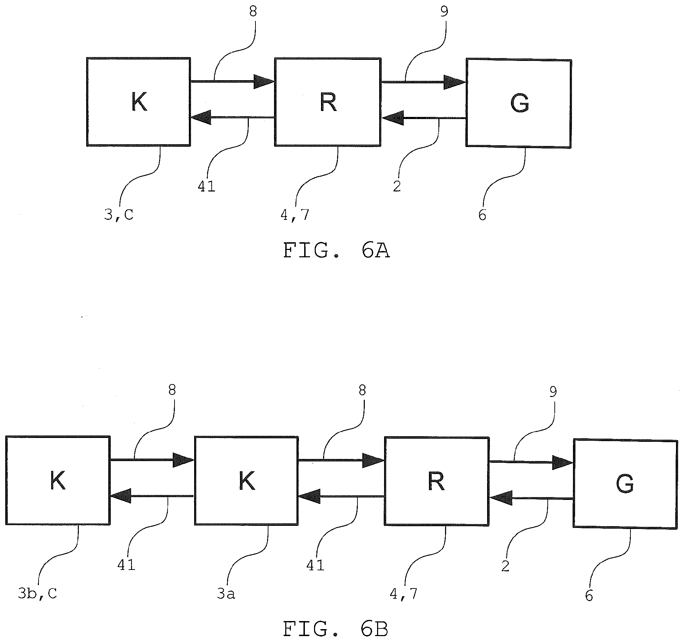

Das Haus 23 enthält eine Recheneinheit 4. Recheneinheit 4 ist drahtlos oder drahtgebunden mit einem Stromzähler 37 in dem Haus, einem Wechselrichter 39 der Solaranlage 36, den flexiblen Verbrauchern 33 und gegebenenfalls den fixen Verbrauchern 31 verbunden. Die flexiblen Verbraucher 33, fixen Verbraucher 31, und der Speicher 32 sind Beispiele für Geräte 6 (siehe Figur 6). Die Geräte 6 senden an die Recheneinheit 4 ihren aktuellen Verbrauch, ihre aktuelle Stromerzeugung und die aktuell gespeicherte Energie. Dies sind Energieflussdaten. Die Recheneinheit 4 sendet diese Daten über eine Firewall 38 und ein Kommunikationsnetzwerk 5 an einen Kontroller 3 (siehe Fig. 6). Die Recheneinheit 4 enthält zusätzlich eine Steuereinheit 7. Die Steuereinheit 7 sendet Befehle an die einzelnen Geräte 6 und weist diese an, ihren Energieverbrauch oder eine Energieproduktion zu steigern oder zu senken. Die Befehle werden entweder durch die Geräte selbst umgesetzt oder durch einen schaltbaren Elektroschalter.

Die Berechnung der Befehle für die Geräte 6 erfolgt durch ein Modell. In dem Modell wird das Haus 23 als ein erster Gridblock 11 modelliert.

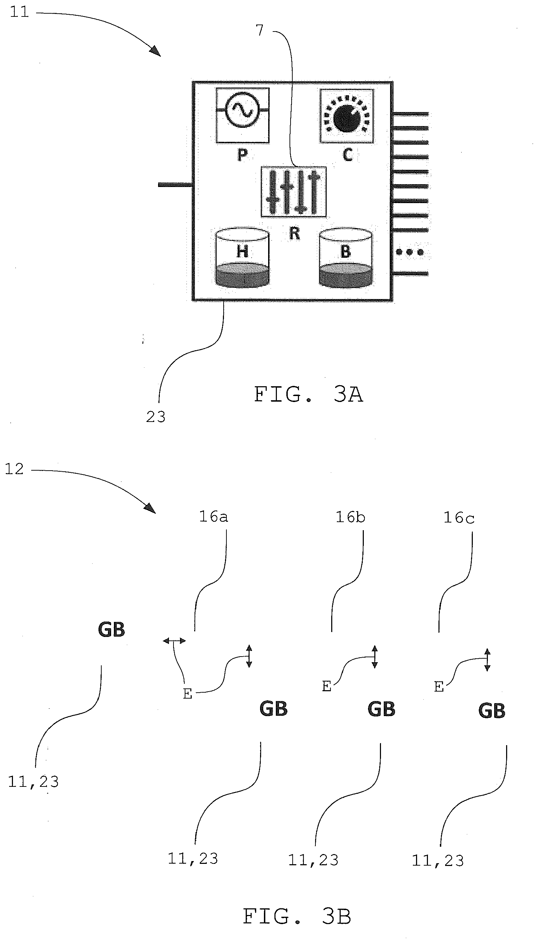

Der Gridblock 11 ist in Figur 3A gezeigt. Der Gridblock 11 enthält eine Produktion P, einen Konsum C, die Steuereinheit 7 und einen physischen Speicher B. Dabei bildet die Produktion P die Produktion innerhalb des Hauses ab, beispielsweise durch die Solaranlage 36. Der Konsum C ist unterteilt in einen flexiblen Teil und einen nicht flexiblen Teil und setzt sich aus dem vom Stromzähler 37 and den Verbrauchern 31 und 33 direkt gemeldeten Verbräuchen zusammen. Der physische Speicher B bildet die Hausbatterie 32 ab. Durch diese Datenstruktur wird das Haus 23 abgebildet.

Der Gridblock 11 sendet über die Steuereinheit 7 direkt Befehle, d.h. konkrete Instruktionen wie "Batterie 32 mit einer bestimmten Leistung (z.B. 10kW) aufladen", an die Geräte 6. Dies ist ein Gridblock 11 der ersten Ebene.

Für den Fall eines Unterbruches 27 (siehe Fig. 2B) des Kommunikationsnetzwerkes 5 enthält die Steueraneinheit ein Notfallregelverhalten. Im Notfallregelverhalten könnten beispielsweise die externen Energieflüsse auf ein Minimum reduziert oder das Haus autark betrieben werden.

Jede Wohnung 22 oder jedes Haus 23, kann durch einen Gridblock modelliert werden. Fig. 3B zeigt eine Mehrzahl an Häusern 23 die entlang einer Strasse angeordnet sind und jeweils duch einen Gridblock 11 modelliert werden. Die Häuser 23 sind entlang einer Energieleitung 16 mit den Segmenten 16a,b,c angeordnet und an diese angeschlossen.

Im Netzbetrieb kann die Auslastung der Leitung und der Leitungssegmente 16a, b, c berechnet werden, indem für jeden Gridblock 11 durch den aktuellen Konsum und die aktuelle Produktion ein externer Energiefluss E berechnet wird. Jeder Gridblock kann seinen eigenen externen Energiefluss E berechnen. In der Folge kann die Auslastung jedes Leitungssegmentes 16 a, b, c berechnet werden.

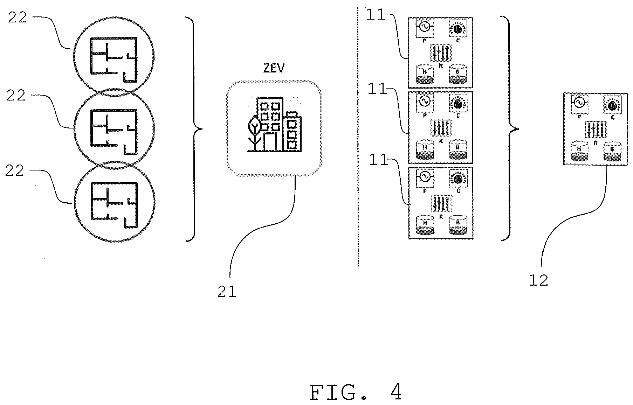

Figur 4 zeigt, wie einzelne Gridblocks 11 erster Ebene zu einem Gridblock 12 zweiter Ebene zusammengefasst werden. Eine ZEV 21 kann mehrere Wohnungen 22 enthalten. Jede der Wohnungen enthält eine Recheneinheit 4 mit einer Steuereinheit 7. Daher kann jede der Wohnungen 22 als ein Gridblock 11 erster Ebene modelliert werden. Die gesamte ZEV kann durch einen Gridblock 12 zweiter Ebene modelliert werden. Der Gridblock 12 zweiter Ebene weist die gleiche Datenstruktur wie der Gridblock 11 der ersten Ebene auf mit einer Produktion P einer Konsumtion C und einem physischen Speicher B auf. Dadurch kann der Gridblock 12 zweiter Ebene einfach als Summe der umfassten und zu steuernden ersten Gridblocks 11 berechnet werden und bildet die gesamte ZEV 21 ab.

Zusätzlich wird noch ein softwarebasierter Regelmechanismus dem zweiten Gridblock 12 zugeordnent. Der Regelmechanismus wird aus einer Auswahl vordefinierter Regelmechnismen für die zweiten Gridblocks ausgewählt.

Der Gridblock 12 kann mit dem Regelmechanismus Anweisungen an die einzelnen ersten Gridblocks 11 senden. Beispielsweise könnte einer der ersten Gridblocks 11 eine Hausbatterie 32 enthalten, mit welcher Energie bereitgestellt werden kann für einen anderen ersten Gridblock 11.

Falls nun ein anderer erster Gridblock 11 zusätzliche Energie benötigt, kann dieser dies an den zweiten Gridblock 12 melden. Dann würde der zweite Gridblock eine Anweisung an den ersten Gridblock 11 schicken, eine bestimmte Menge an Energie bereitzustellen. Der erste Gridblock 11 würde, die in ihm enthaltenen Geräte prüfen und anschliessend entscheiden mit welchem Speicher oder mit welcher Produktion die Energie bereitzustellen ist und einen Befehl an das entsprechende Gerät senden.

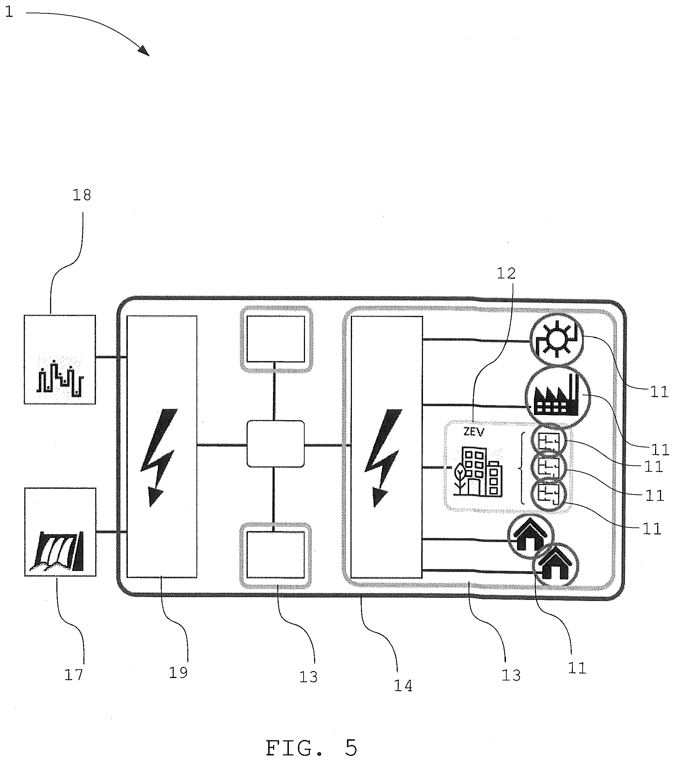

Die derartige Struktur lässt sich auch auf grössere Systeme übertragen und skalieren. Figur 5 zeigt das Energienetz 1 aus Figur 1, wobei verschiedene Ebenen an Gridblocks 11 bis 14 eingezeichnet sind. Sowohl die Wohnungen 22 als auch die Fabrik 24 oder die Einfamilienhäuser 23 können als einzelne erste Gridblocks 11 zusammengefasst werden. Diese ersten Gridblocks 11 können durch einen zweiten Gridblock 12 zusammengefasst werden. Mehrere zweite Gridblock 12 oder auch zweite und mehrere erste Gridblocks 11 in Kombination können dann durch einen dritten Gridblock 13 zusammengefasst werden (siehe fig. 5). Der dritte Gridblock 13 bildet das Verbundnetz 20 ab. Mehrere Verbundnetze 20 können wiederum durch einen vierten Gridblock 14 abgebildet werden, usw.

Jeder Gridblock 11 bis 14 wird durch einen einzigen anderen Gridblock einer höheren Ebene 12 bis 14 gesteuert. Allerdings kann jeder Gridblock einer höheren Ebene mehrere Gridblocks einer tieferen Ebene umfassen und ihnen Anweisungen schicken. Wie beim zweiten Gridblock 12 werden den dritten und vierten Gridblocks 13, 14 Regelmechanismen zugeordnet.

Durch die Überwachung der Produktion und der Konsumation und des Speichers kann jeder Gridblock einen externen Energiefluss berechnen. Der externe Energiefluss kann in einem virtuellen Speicher H überwacht werden. So können beispielsweise Energiegutschriften bzw. Energieschulden zwischen Gridblocks in dem virtuellen Speicher H überwacht werden.

Figur 6A zeigt eine Kommunikation zwischen einem Gerät 6, der Recheneinheit 4 mit der Steuereinheit 7 und dem Kontroller 3. Das Gerät 6 sendet Energieflussdaten 2 an die Recheneinheit 4. Die Recheneinheit 4 speichert diese Daten im ersten Gridblock 11 (siehe Figur 3A), fasst diese Zusammen und leitet diese Energieflussdaten 2 an den Kontroller 3 weiter. Auf dem Kontroller 3 wird der zweite Gridblock 12 ausgeführt. Der Kontroller 3 speichert die Energieflussdaten 2 im zweiten Gridblock 12. Basierend auf den Daten 2 schickt der Kontroller 3 Anweisungen 8 an die Recheneinheit 4. Die Steuereinheit 7 berechnet aus den Anweisungen konkrete Befehle 9 für die einzelnen Geräte 6. Die Befehle 9 werden an die Geräte 6 übertragen.

Die Gridblocks 12 bis 14 werden auf einem oder mehreren Kontrollern ausgeführt. In dem in Fig 6B gezeigten Beispiel wird ein zweiter Gridblock auf dem Kontroller 3a und ein dritter Gridblock auf dem Kontroller 3b ausgeführt. Die Gridblocks 11 bis 14 senden untereinander lediglich die aggregierten Energieflussdaten 2, Anfragen 41 und Anweisungen 8.

## Patentansprüche

1. Computerimplementiertes Verfahren zur dezentralen Steuerung eines Elektrizitätsnetzes, umfassend die Schritte:
- Empfangen von Energieflussdaten (2) mit einem Kontroller (3, 3a, 3b) von zumindest zwei Recheneinheiten (4) über ein Kommunikationsnetzwerk (5), wobei an die Recheneinheiten (4) jeweils eine Mehrzahl an Geräten (6) angeschlossen sind, wobei die Geräte (6) Energieflüsse erfassen und/oder beeinflussen und die Energieflussdaten den aktuellen Verbrauch, die aktuelle Stromerzeugung und die aktuell gespeicherte Energie der Geräte umfassen, und wobei die Recheneinheiten (4) je eine Steuereinheit (7) aufweisen, und wobei zumindest ein Teil der Geräte (6) Energieflussdaten an die Recheneinheit (4) sendet;
- Modellieren der Recheneinheiten (4) mit den angeschlossenen Geräten (6) mit je einem ersten Gridblock (10), wobei die Gridblocks (11) eine Datenstruktur mit einem Energiekonsum (K), einer Energieproduktion (P), einen physischen Energiespeicher (B) aufweist, und zumindest einem externen Energiefluss (E) aufweist,
- Wobei der Konsum (K) die Summe aller konsumierten Energie im ersten Gridblock darstellt, die Produktion (P) die Summe aller produzierten Energie im ersten Gridblock, der Speicher (B) die Summe aller in physischen Speicher gespeicherten Energie im ersten Gridblock und der externe Energiefluss (E) die in den oder aus dem Gridblock fliessende Energie darstellt;
- Modellieren der ersten Gridblocks (11) mit einem zweiten Gridblock (12) mit dem Kontroller (3), wobei der zweite Gridblock (12) eine Mehrzahl an ersten Gridblocks (11) umfasst, und wobei der zweite Gridblock (12) die gleiche Datenstruktur wie der erste Gridblock (11) aufweist;
- Zuordnen eines Regelmechanismus (C) an jeden zweiten Gridblock;
- Steuerung eines oder mehrerer erster Gridblocks (11) durch den Regelmechanismus (C), wobei der Regelmechanismus (C) des zweiten Gridblocks (12)) Anweisungen (8) an die ersten Gridblocks (11) sendet, wobei die Anweisungen (8) lediglich Signale zur Steuerung der ersten Gridblocks (11) als Ganzes enthält, ohne einzelne Geräte (6) des ersten Gridblocks direkt zu steuern;
- Berechnung von Steuerbefehlen (9) für die einzelnen Geräte (6) durch die Steuereinheit (7) der Recheneinheit (4) des ersten Gridblocks (11) basierend auf den Anweisungen (8); und
- Senden der Steuerbefehle (9) an die Geräte.

2. Verfahren gemäss Anspruch 1, wobei beim Modellieren jedem zweiten Gridblock (12) und/oder ersten Gridblock (11) ein Regelmechanismus (C) zugeordnet wird, wobei der Regelmechanismus aus einer Auswahl vorgegebener Regelmechanismen entsprechend der im Gridblock (11-14) vorhanden Geräte (6) und/oder einer Ebene des Gridblocks (11-14) ausgewählt wird.

3. Verfahren gemäss Anspruch 1 oder 2, wobei die Recheneinheiten (4) maximale und/oder minimalen Konsum, Produktion und Speicherkapazität an den Kontroller senden und wobei die Gridblocks jeweils den maximale und/oder minimalen Konsum, Energie und Speicherkapazität enthalten.

4. Verfahren gemäss einem der vorherigen Ansprüche, wobei jeder Gridblock (11-14) eingerichtet ist von einem einzigen anderen, übergeordneten Gridblock Anweisungen (8) zu erhalten und wobei jeder Gridblock (12-14) bevorzugt eingerichtet ist an einen oder mehrere andere, untergeordnete Gridblocks (11-13) Anweisungen (8) zu senden.

5. Verfahren gemäss einem der vorherigen Ansprüche, wobei die Regelmechanismen (C) und/oder die Steuereinheit (7) eingerichtet sind, autonom den jeweilig zugehörigen Gridblock (11-14) zu steuern.

6. Verfahren gemäss einem der vorherigen Ansprüche mit mehreren ersten Gridblocks (11) und einem oder mehreren zweiten Gridblocks (12) enthaltend die Schritte:
- Modellieren des oder der zweiten Gridblocks (12) mit einem dritten Gridblock (13), wobei der dritte Gridblock (13) ein oder mehrere zweite Gridblocks (12) umfasst, und wobei der dritte Gridblock (13) die gleiche Datenstruktur wie der erste Gridblock (11) und der zweite Gridblock (12) aufweist;
- Zuordnen eines Regelmechanismus (C) an jeden dritten Gridblock (13);
- Steuerung eines oder mehrerer zweiter Gridblocks (12) durch den Regelmechanismus (C) des dritten Gridblocks (13), wobei der dritte Gridblock (13) Anweisungen (8) an den oder die zweiten Gridblocks (12) sendet, wobei die Anweisungen (8) lediglich Signale zur Steuerung der zweiten Gridblocks (12) als Ganzes enthält, ohne die ersten Gridblocks (11), welche durch den oder die zweiten Gridblocks (12) modelliert werden, direkt zu steuern.

7. Verfahren nach einem der Ansprüche 1 bis 6, wobei der physische Speicher gebildet ist durch einen Speicher, welcher im Zusammenhang mit dem Ausspeisen von Energie oder dem Einspeisen von Energie ("Einatmen") dazu dient, eine flexible Produktion oder einen flexiblen Konsum zu bewerkstelligen.

8. Vorrichtung (10) zur dezentralen Steuerung von Elektrizitätsnetzen, mit zumindest zwei Recheneinheiten (4) und einem Kontroller (3), wobei die Vorrichtung (10) ausgebildet ist, das Verfahren gemäss einem der Ansprüche 1 bis 7 auszuführen.

9. Vorrichtung gemäss Anspruch 8, wobei zumindest die Geräte (6) von zwei oder mehr der ersten Gridblocks (11) entlang einer Leitung (16) angeordnet sind und mit dieser verbunden sind, wobei ein Energiefluss über die Leitung (16) erfolgt, und wobei die Energieflussdaten aus einem Gridblock (11-14) den Energiefluss zwischen den Geräten (6) eines Gridblocks (11-14) und der Leitung darstellen.

10. Vorrichtung gemäss Anspruch 8 oder 9, wobei jeder Gridblock (11-14) zusätzlich einen virtuellen Energiespeicher (H) aufweist, wobei der Regelmechanismus (C) eingerichtet ist Mengen an transferierter Energie zu anderen Gridblocks (11-14) zu protokollieren und in dem virtuellen Energiespeicher (H) abzulegen.

11. Computerprogrammprodukt umfassend Befehle, die bei der Ausführung des Programms durch einen Kontroller und eine Recheneinheit diese veranlassen, das Verfahren gemäss einem der Ansprüche 1 bis 7 auszuführen.

## Claims

1. A computer-implemented method for decentralized control of an electricity network, comprising the steps of:
- Receiving energy flow data (2) with a controller (3, 3a, 3b) from at least two computing units (4) via a communication network (5), wherein a plurality of devices (6) are connected to each of the computing units (4), wherein the devices (6) detect and/or influence energy flows and the energy flow data comprise the current consumption, the current power generation and the currently stored energy of the devices, and wherein the computing units (4) each have a control unit (7), and wherein at least some of the devices (6) send energy flow data to the computing unit (4);
- Modeling the computing units (4) with the connected devices (6) with a first grid block (10) each, wherein the grid block (11) has a data structure with an energy consumption (K), an energy production (P), a physical energy storage (B), and at least one external energy flow (E),
- Where consumption (K) represents the sum of all energy consumed in the first grid block, production (P) represents the sum of all energy produced in the first grid block, storage (B) represents the sum of all energy stored in physical storage in the first grid block, and external energy flow (E) represents energy flowing into or out of the grid block;
- modeling the first grid blocks (11) with a second grid block (12) with the controller (3), wherein the second grid block (12) comprises a plurality of first grid blocks (11), and wherein the second grid block (12) has the same data structure as the first grid block (11) ;
- Assigning a control mechanism (C) to every other grid block;
- Control of one or more first grid blocks (11) by the control mechanism (C), wherein the control mechanism (C) of the second grid block (12)) sends instructions (8) to the first grid blocks (11), wherein the instructions (8) only contain signals for controlling the first grid blocks (11) as a whole without directly controlling individual devices (6) of the first grid block;
- calculation of control commands (9) for the individual devices (6) by the control unit (7) of the computing unit (4) of the first grid block (11) based on the instructions (8); and
- Sending the control commands (9) to the devices.

2. Method according to claim 1, wherein during modeling a control mechanism (C) is assigned to each second grid block (12) and/or first grid block (11), wherein the control mechanism is selected from a selection of predetermined control mechanisms corresponding to the devices (6) present in the grid block (11-14) and/or a level of the grid block (11-14) .

3. Method according to claim 1 or 2, wherein the computing units (4) send maximum and/or minimum consumption, production and storage capacity to the controller and wherein the grid blocks respectively contain the maximum and/or minimum consumption, energy and storage capacity.

4. A method according to any one of the preceding claims, wherein each grid block (11-14) is arranged to receive instructions (8) from a single other, parent grid block, and wherein each grid block (12-14) is preferably arranged to send instructions (8) to one or more other, child grid blocks (11-13).

5. Method according to any one of the preceding claims, wherein the control mechanisms (C) and/or the control unit (7) are set up to autonomously control the respective associated grid block (11-14).

6. A method according to any one of the preceding claims comprising a plurality of first grid blocks (11) and one or more second grid blocks (12) comprising the steps of:
- modeling the or each second grid block (12) with a third grid block (13), wherein the third grid block (13) comprises one or more second grid blocks (12), and wherein the third grid block (13) has the same data structure as the first grid block (11) and the second grid block (12);
- Assigning a control mechanism (C) to every third grid block (13);
- Control of one or more second grid blocks (12) by the control mechanism (C) of the third grid block (13), wherein the third grid block (13) sends instructions (8) to the one or more second grid blocks (12), the instructions (8) only containing signals to control the second grid blocks (12) as a whole without directly controlling the first grid blocks (11) modeled by the one or more second grid blocks (12).

7. Method according to any one of claims 1 to 6, wherein the physical storage is constituted by a storage which, in connection with the delivery of energy or the withdrawal of energy ("inhalation"), serves to accomplish flexible production or consumption.

8. Device (10) for decentralized control of electricity networks, having at least two computing units (4) and a controller (3), the device (10) being designed to carry out the method according to one of claims 1 to 7.

9. Device according to claim 8, wherein at least the devices (6) of two or more of the first grid blocks (11) are arranged along and connected to a line (16), wherein an energy flow occurs via the line (16), and wherein the energy flow data from a grid block (11-14) represents the energy flow between the devices (6) of a grid block (11-14) and the line.

10. Device according to claim 8 or 9, wherein each grid block (11-14) additionally comprises a virtual energy store (H), wherein the control mechanism (C) is arranged to log amounts of transferred energy to other grid blocks (11-14) and to store them in the virtual energy store (H).

11. A computer program product comprising commands which, when the program is executed by a controller and a computing unit, cause the controller and computing unit to execute the method according to any one of claims 1 to 7.

## Revendications

1. Méthode mise en oeuvre par ordinateur pour le contrôle décentralisé d'un réseau électrique, comprenant les étapes suivantes :
- Réception de données de flux d'énergie (2) avec un contrôleur (3, 3a, 3b) à partir d'au moins deux unités calcul (4) via un réseau de communication (5), dans lequel une pluralité de dispositifs (6) sont connectés à chacune des unités calcul (4), dans lequel les dispositifs (6) détectent et/ou influencent les flux d'énergie et les données de flux d'énergie comprennent la consommation actuelle, la production d'électricité actuelle et l'énergie stockée actuelle des dispositifs, et dans lequel les unités de calcul (4) ont chacune une unité de calcul (7), et dans lequel au moins certains des dispositifs (6) envoient des données de flux d'énergie à l'unité de calcul (4) ;
- Modéliser les unités de calcul (4) avec les dispositifs connectés (6) avec un premier bloc de grille (10) chacun, le bloc de grille (11) ayant une structure de données avec une consommation d'énergie (K), une production d'énergie (P), un stockage physique d'énergie (B), et au moins un flux d'énergie externe (E),
- Où la consommation (K) représente la somme de toute l'énergie consommée dans le premier bloc de grille, la production (P) représente la somme de toute l'énergie produite dans le premier bloc de grille, le stockage (B) représente la somme de toute l'énergie stockée dans le stockage physique dans le premier bloc de grille, et le flux d'énergie externe (E) représente le flux d'énergie entrant ou sortant du bloc de grille ;
- modéliser les premiers blocs de grille (11) avec un deuxième bloc de grille (12) avec le contrôleur (3), dans lequel le deuxième bloc de grille (12) comprend une pluralité de premiers blocs de grille (11), et dans lequel le deuxième bloc de grille (12) a la même structure de données que le premier bloc de grille (11) ;
- Attribution d'un mécanisme de contrôle (C) à un bloc de grille sur deux ;
- Contrôle d'un ou de plusieurs premiers blocs de grille (11) par le mécanisme de contrôle (C), dans lequel le mécanisme de contrôle (C) du deuxième bloc de grille (12)) envoie des instructions (8) aux premiers blocs de grille (11), les instructions (8) ne contenant que des signaux pour contrôler les premiers blocs de grille (11) dans leur ensemble sans contrôler directement les dispositifs individuels (6) du premier bloc de grille ;
- calcul des commandes de contrôle (9) pour les différents dispositifs (6) par l'unité de contrôle (7) de l'unité de calcul (4) du premier bloc de grille (11) sur la base des instructions (8) ; et
- Envoi des commandes de contrôle (9) aux dispositifs.

2. Procédé selon la revendication 1, dans lequel, lors de la modélisation, un mécanisme de contrôle (C) est attribué à chaque deuxième bloc de grille (12) et/ou premier bloc de grille (11), le mécanisme de contrôle étant choisi parmi une sélection de mécanismes de contrôle prédéterminés correspondant aux dispositifs (6) présents dans le bloc de grille (11-14) et/ou à un niveau du bloc de grille (11-14).

3. Procédé selon la revendication 1 ou 2, dans lequel les unités de calcul (4) envoient la consommation, la production et la capacité de stockage maximales et/ou minimales au contrôleur et dans lequel les blocs grilles contiennent respectivement la consommation, l'énergie et la capacité de stockage maximales et/ou minimales.

4. Procédé selon l'une quelconque des revendications précédentes, dans lequel chaque bloc de grille (11-14) est conçu pour recevoir des instructions (8) d'un seul autre bloc de grille parent, et dans lequel chaque bloc de grille (12-14) est de préférence conçu pour envoyer des instructions (8) à un ou plusieurs autres blocs de grille enfants (11-13).

5. Procédé selon l'une quelconque des revendications précédentes, dans lequel les mécanismes de contrôle (C) et/ou l'unité de contrôle (7) sont configurés pour contrôler de manière autonome le bloc de grille associé respectif (11-14) .

6. Procédé selon l'une quelconque des revendications précédentes comprenant une pluralité de premiers blocs grilles (11) et un ou plusieurs seconds blocs grilles (12) comprenant les étapes suivantes :
- modéliser le ou chaque deuxième bloc de grille (12) avec un troisième bloc de grille (13), dans lequel le troisième bloc de grille (13) comprend un ou plusieurs deuxièmes blocs de grille (12), et dans lequel le troisième bloc de grille (13) a la même structure de données que le premier bloc de grille (11) et le deuxième bloc de grille (12) ;
- Attribution d'un mécanisme de contrôle (C) à chaque troisième bloc de grille (13) ;
- Contrôle d'un ou de plusieurs deuxièmes blocs de grille (12) par le mécanisme de contrôle (C) du troisième bloc de grille (13), dans lequel le troisième bloc de grille (13) envoie des instructions (8) au ou aux deuxièmes blocs de grille (12), les instructions (8) ne contenant que des signaux pour contrôler les deuxièmes blocs de grille (12) dans leur ensemble sans contrôler directement les premiers blocs de grille (11) modélisés par le ou les deuxièmes blocs de grille (12).

7. Procédé selon l'une quelconque des revendications 1 à 6, dans lequel le stockage physique est constitué par un stockage qui, en relation avec la livraison d'énergie ou le retrait d'énergie ("inhalation"), sert à accomplir une production ou une consommation flexible.

8. Dispositif (10) de contrôle décentralisé de réseaux électriques, comportant au moins deux unités de calcul (4) et un contrôleur (3), le dispositif (10) étant conçu pour mettre en oeuvre le procédé selon l'une des revendications 1 à 7.

9. Dispositif selon la revendication 8Dans ce cas, au moins les dispositifs (6) de deux ou plusieurs des premiers blocs de grille (11) sont disposés le long d'une ligne (16) et connectés à celle-ci, un flux d'énergie se produit via la ligne (16), et les données de flux d'énergie d'un bloc de grille (11-14) représentent le flux d'énergie entre les dispositifs (6) d'un bloc de grille (11-14) et la ligne.

10. Dispositif selon la revendication 8 ou 9Le mécanisme de contrôle (C) est conçu pour enregistrer les quantités d'énergie transférées vers d'autres blocs grilles (11-14) et pour les stocker dans le magasin d'énergie virtuel (H).

11. Produit programme d'ordinateur comprenant des commandes qui, lorsque le programme est exécuté par un contrôleur et une unité de calcul, amènent le contrôleur et l'unité de calcul à exécuter la méthode selon l'une quelconque des revendications 1 à 7.
